# EUROPEAN PATENT APPLICATION

(11) **EP 4 796 432 A1**
(43) Date of publication of application: **26.08.2026**
(21) Application number: 26156524.6
(22) Date of filing: 05.02.2026
(51) Int. Cl.: B64C 1/14, B64C 1/18, B64D 11/06

(54) **AIRCRAFT CABIN UNDER SEAT FLUID DIVERTING APPARATUS AND METHOD**

(30) Priority: 21.02.2025 US 202519059767
(71) Applicant: The Boeing Company, Arlington, VA 22202 (US)
(72) Inventor: HUNT, Anthony Elton, ARLINGTON, 22202 (US); LAFORGE, Scott Damon, ARLINGTON, 22202 (US); SULLIVAN, Nicholas Leigh, ARLINGTON, 22202 (US)
(74) Representative: Plasseraud IP

(57) **Abstract**

Aircraft cabin fluid diverting assemblies positioned in an aircraft cabin to divert, redirect, cause a directed fluid flow and selected fluid flow evacuation away from, and facilitate a directed fluid flow and selected evacuation of fluid away from a moisture-sensitive compartment, elimination of fluids from an aircraft cabin floor, and methods of installing aircraft cabin fluid diverting assemblies are disclosed.

## Description

### TECHNOLOGICAL FIELD

The present disclosure generally relates to the field of directing unwanted fluid accumulation from a region of an aircraft passenger cabin. More specifically, the present disclosure relates to the field of preventing unwanted moisture from entering into aircraft moisture-sensitive compartments housing moisture-sensitive equipment and/or cargo.

### BACKGROUND

Aircraft components that are sensitive to excessive moisture are often located in regions of the aircraft designed to be isolated from excessive moisture. Electrical and other equipment bays that could be impacted by excessive moisture are often located in aircraft regions located below passenger cabins/compartments, and are separated from such passenger cabins/compartments by a passenger cabin floor.

Unless explicitly identified as such, no statement herein is admitted as prior art merely by its inclusion in the Technological Field and/or Background section(s).

### SUMMARY

A present aspect is directed to an aircraft cabin fluid diverting assembly according to claim 1.

In another present aspect, the drain element may comprise a drain body comprising a drain body length, with the drain body further comprising a drain base and three drain body walls extending from the drain base, with the drain body further comprising a drain channel, with the drain channel further comprising a drain channel surface, with the drain channel bounded by the three drain walls and the drain base, and with the drain channel further comprising an open drain end.

In another present aspect, the open drain end may be in communication with a fluid conduit, said fluid conduit configured to receive a fluid flow from the drain open drain end of the drain element.

In another present aspect, the drain element may be bonded to at least one of the first segment base second ("exterior") surface and the second segment base second ("exterior") surface.

In another present aspect, the drain element may be integral with one of the first segment base second surface and the second segment base second surface.

In another present aspect, the first segment base slope (S1) and the second segment base slope (S2) may be configured to direct a fluid flow to the drain element.

In another present aspect, the first segment base slope and said second segment base slope may comprise a dimensional slope gradient ranging from about 0.125 inch/ft to about 1.0 inch/ft.

In another present aspect, the first segment base slope and said second segment base slope may comprise a curved slope value ranging from about 5 degrees (°) to about 15 degrees (°) out-of-plane along the length of the drain element.

In another present aspect, at least one of said first segment base first surface, the second segment base first surface, and the drain channel surface may further comprise a hydrophobic material.

In another present aspect, at least one of said first segment base first surface, the second segment base first surface, and the drain channel surface may further comprise a hydrophobic material coating.

In another present aspect, the drain channel may comprise a drain channel slope (S3), with the drain channel slope configured to descend directionally from a drain element closed end toward the open drain end.

Another present aspect is directed to an aircraft according to claim 9.

Another present aspect is directed to an aircraft cabin assembly according to claim 10.

Another present aspect is directed to an aircraft cabin according to claim 11.

A further present aspect is directed to an aircraft according to claim 12.

Another present aspect is directed to a method according to claim 13.

In another present aspect, the method may further comprise diverting a fluid flow originating in an aircraft cabin from the aircraft cabin away from the equipment bay via the aircraft fluid diverting assembly.

In another present aspect, the method may further comprise diverting the fluid flow from the aircraft fluid diverting assembly into a bilge collector.

The features, functions and advantages that have been discussed can be achieved independently in various aspects or may be combined in yet other aspects, further details of which can be seen with reference to the following description and the drawings.

### BRIEF DESCRIPTION OF THE DRAWINGS

Having thus described variations of the disclosure in general terms, reference will now be made to the accompanying drawings, which are not necessarily drawn to scale, and wherein:
FIG. 1 is a perspective view of an example aircraft;
FIG. 2 is a cross-sectional view of an aircraft of the type shown in FIG. 1;
FIG. 3A is a perspective and elevated view of a constructed example aircraft cabin fluid diverting assembly;
FIG. 3B is a perspective exploded view of an example aircraft cabin fluid diverting assembly and an example aircraft cabin assembly being constructed and configured to engage an aircraft seat support track;
FIG. 4 is a perspective and disassembled and/or pre-assembled view of the underside of a present example aircraft cabin fluid diverting assembly being brought into a position to an aircraft seat support track to form the example aircraft cabin assembly;
FIG. 5 is an enlarged perspective end view of the present example aircraft cabin assembly comprising the present aircraft cabin fluid diverting assembly in combination with the aircraft seat support track to form the present example aircraft cabin assembly;
FIG. 6 is an enlarged, elevated and partial perspective "top" view of a disassembled and/or pre-assembled portion of the present example aircraft cabin fluid diverting assembly showing a fluid collection base first segment and a drain element;
FIG. 7 is a "top" view (e.g. overhead, plan view) of the present example aircraft cabin fluid diverting assembly in position surrounding an aircraft seat support element in the form of an aircraft seat support track, to form the present example aircraft cabin assembly;
FIG. 8 is a side view of the of the present example aircraft cabin fluid diverting assembly in position surrounding an example aircraft seat support element in the form of an aircraft seat support track, to form the present example aircraft cabin assembly, of the type shown in FIG. 7;
FIG. 9 is a cross-sectional side view of the of the present example aircraft cabin fluid diverting assembly in position surrounding an example aircraft seat support element in the form of an aircraft seat support track, to form the present example aircraft cabin assembly of the type shown in FIG. 7 and taken along line 9-9;
FIG. 10 is a cross-sectional view of the of the present example aircraft cabin fluid diverting assembly in position surrounding an example aircraft seat support element in the form of an aircraft seat support track, to form the present example aircraft cabin assembly of the type shown in FIG. 8 taken along line 10-10;
FIG. 11 is a "top" view (e.g., an overhead plan view) of the assembled present example aircraft cabin fluid diverting assembly;
FIG. 12 is a cross-sectional view of the assembled present example aircraft cabin fluid diverting assembly of the type shown in FIG. 11 taken along line 12-12 and showing a cross-sectional view of the drain element and the drain element slope;
FIG. 13 is a side view of the assembled present example aircraft cabin fluid diverting assembly of the type shown in FIG. 11;
FIG. 14 is an enlarged side view of the area "A" of the assembled present example aircraft cabin fluid diverting assembly of the type shown in FIG. 13;
FIG. 15 is an example flowchart outlining a present method;
FIG. 16 is an example flowchart outlining a present method; and
FIG. 17 is an example flowchart outlining a present method.

### DETAILED DESCRIPTION

Presently disclosed fluid directing assemblies and presently disclosed methods for installing and employing the presently disclosed fluid directing assemblies, in operation, divert, cause, and facilitate a directed and selected evacuation, redirection, and/or elimination of unwanted fluid volumes from an aircraft cabin (including in the vicinity of an aircraft cabin floor, that can be a region of aircraft cabin floor near, proximate to, and beneath a passenger seating area. Such unwanted fluids in a passenger cabin could undesirably find entry to adjacent or remotely located compartments via existing pathways (e.g., structural gaps, etc.) that could lead a fluid towards and into aircraft compartments that can be compartments in communication and/or adjoining a potential fluid pathway when fluids are present in a floor region of an aircraft cabin (e.g., including compartments located below or beneath the aircraft cabin floor proximate to a passenger seating area). Such adjoining compartments can be moisture-sensitive compartments located beneath a passenger cabin floor that can contain moisture-sensitive equipment, including, for example, electronics that can include electronics comprising or otherwise supporting sensors, power generation components, hydraulics, batteries, wiring, and other devices, as well as other cargo where moisture, moisture level increases, pooling fluid, etc., is unwanted.

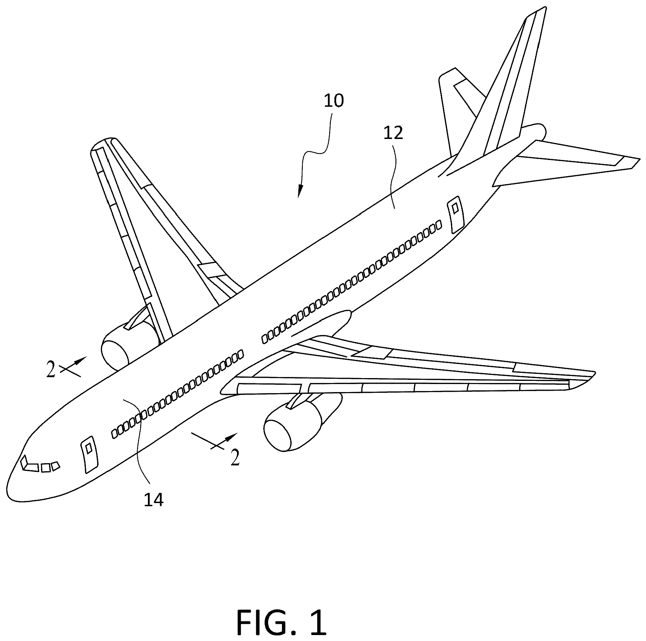

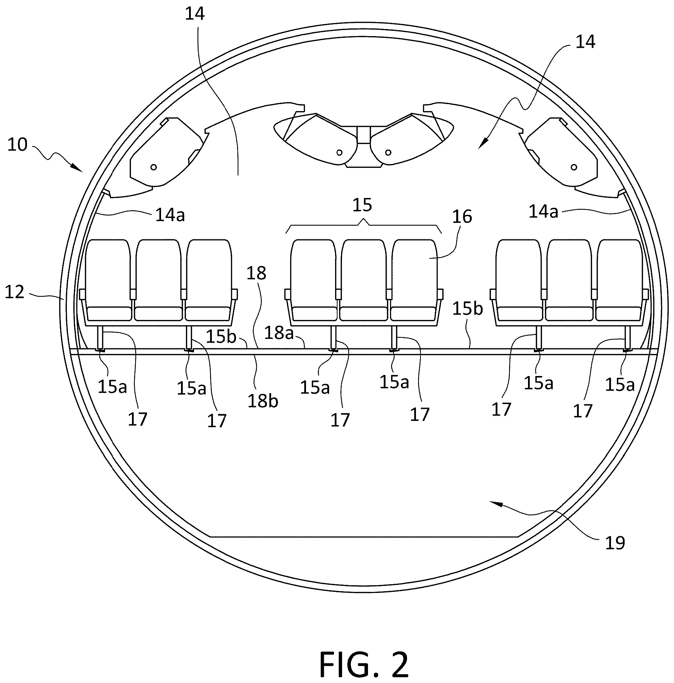

The accompanying FIGs. are provided and described herein to further illustrate aspects of the present disclosure. FIG. 1 is a perspective view of an aircraft 10 comprising an aircraft fuselage 12, with the aircraft 10 being of the type that can comprise an aircraft cabin 14 substantially bounded by an aircraft cabin outboard wall (equivalently referred to herein as a "sidewall") positioned within the aircraft fuselage interior (e.g., shown in FIG. 2).

FIG. 2 is a representative cross-sectional view of aircraft 10 that can be of the type shown in FIG. 1, taken along line 2-2 with a view into aircraft cabin 14. As shown in FIG. 2, aircraft cabin 14 (referred to equivalently herein as "aircraft passenger cabin") can comprise an aircraft cabin sidewall 14a (referred to equivalently herein, at least with respect to a position within the aircraft cabin, as an "aircraft cabin outboard wall"). Aircraft cabin 14 further comprises passenger seats 16 that, depending upon the aircraft seating design and cabin configuration, can be deployed into locations throughout the aircraft cabin 14 and arranged into individual seats and seat assemblies that can be adjacent an aisle, and that can be (as shown in FIG. 2) an aircraft seat assembly 15 comprising a plurality of aircraft seats 16, with the aircraft seat assembly 15 positioned adjacent at least one aisle 15b, and with the aircraft seat assembly attached to and/or removably anchored to a seat support assembly 15a that can be located at, near, and/or just beneath an aircraft cabin floor.

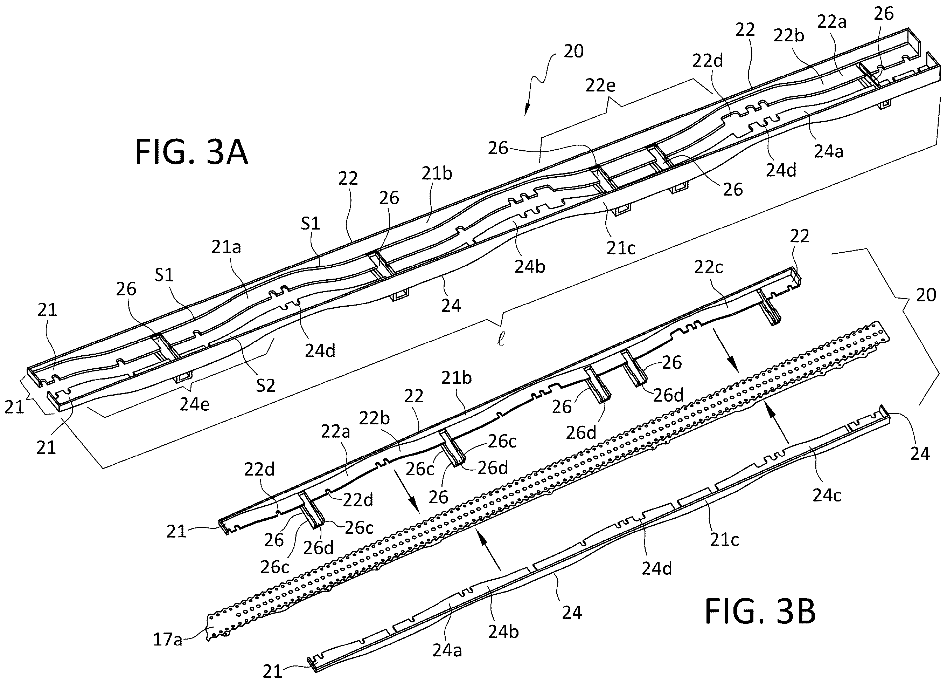

As shown in FIG. 2, the aircraft seat 16 and aircraft seat assembly 15 can comprise an aircraft seat support element 17 that can be, for example, in the form of a substantially vertical post, strut, frame extension, etc., extending downward and away from an underside of a seat, and/or seat assembly, and/or seat (assembly) frame. The aircraft seat support element 17 comprises an aircraft seat support element first end configured to be attached to or that is integral with a seat or seat assembly, or seat frame, or that can be attached to or that is integral with an aircraft seat assembly frame (that, for example, can support one or more aircraft passenger seats, etc.). The aircraft seat support element 17 can comprise an aircraft seat support element second end configured to engage with an aircraft seat support element located at or beneath an aircraft cabin floor 18 that can be, for example, an aircraft seat support track 17a (shown in FIG. 3B) that is configured to receive, and/or secure, and/or fixedly attach to the aircraft seat support element 17 (at, for example, an aircraft seat support element second end). In an engaged and installed seat configuration, the aircraft seat support track 17a is configured to immobilize the aircraft seat assembly in a fixed location.

As further shown in FIG. 2, the aircraft seat support track 17a can be located just beneath and adjacent to, or at a short distance beneath and otherwise in communication with, an aircraft cabin floor second surface 18b (referred to equivalently herein as an "aircraft cabin floor underside" and an "aircraft cabin floor bottom surface") that is not exposed (is not visible from a position within the aircraft cabin) and that does not face into aircraft cabin 14 and that, instead, faces into and/or toward, for example, an aircraft compartment 19 located beneath an aircraft cabin 14. Aircraft compartment 19 can be or can otherwise house, for example, a cargo compartment, an equipment bay, etc. As shown in FIG. 2, aircraft cabin floor 18 further comprises an aircraft cabin floor first surface 18a (referred to equivalently herein as an "aircraft cabin floor 'top' surface") that is exposed to and that faces into aircraft cabin 14.

The openings created in an aircraft cabin floor, including openings created in an aircraft cabin floor to install and/or secure, attach, etc., aircraft cabin assemblies that are located proximate to an aircraft cabin floor can create a vulnerability to liquid seepage, liquid migration, liquid entry, etc., at the opening and at an interface of an assembly positioned within, at, or near, the floor opening and/or positioned within or at a floor opening perimeter. Even if seals are employed, at least over time, or in the event of seal separation, etc., such openings in an aircraft cabin floor can present a problem for potential unwanted fluid migration (e.g., via a fluid flow) when the floor opening is proximate to a beneath-the-floor compartment that is configured to house, for example, moisture sensitive equipment. Present aspects address this need that exists to mitigate and/or eliminate the unwanted transport and flow of amounts of fluids (e.g., aircraft cabin liquid spillage, biological fluids from passengers, environmental moisture from rain/snow brought into the cabin area by passengers, etc.) from the cabin into moisture-sensitive compartments located beneath an aircraft cabin floor.

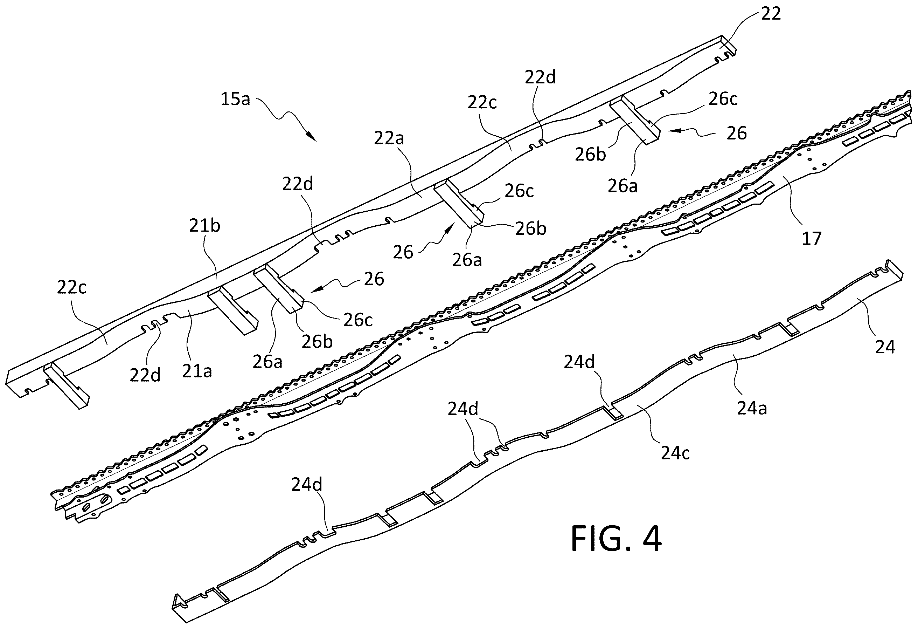

FIG. 3A shows an elevated view of a present aircraft cabin fluid directing assembly 20 . In one present aspect, the aircraft cabin fluid directing assembly 20 comprises two lengthwise segments 22, 24 that are closely dimensioned and configured to be assembled around and otherwise "surround" an aircraft seat support track (e.g., be brought into contact with to substantially "surround" an aircraft seat support track), and that, in an assembled configuration, combine to form an aircraft cabin assembly that comprises a surrounded aircraft seat support track 17 incorporated with and substantially surrounded by the aircraft cabin fluid directing assembly 20 into a substantially water impervious aircraft cabin assembly 15a (as shown in FIG. 4) located at an aircraft cabin floor opening, such that a fluid flow is not permitted to gain entry to a "beneath-the-floor" compartment via, for example, a floor opening, gap, seam, etc. In addition, the present aircraft cabin fluid directing assembly 20 comprises an intentional internal slope configured to admit a fluid into a fluid collection trough section, and then direct a fluid flow along a length of the fluid collection trough and into one or more drain elements that are located along the length of the fluid collection trough and that are incorporated into and otherwise become a part of the present aircraft cabin fluid directing assembly.

FIG. 3A shows a present aircraft cabin fluid directing assembly 20 in an aircraft cabin fluid directing assembly 20 assembled state, itself (e.g., without an associated and "surrounded" aircraft seat support track). FIG. 3B shows the present aircraft cabin fluid directing assembly 20 of the type shown in FIG. 3A in a pre-assembled configuration or "state" (referred to equivalently herein as a disassembled state), and with components of the present aircraft cabin fluid directing assembly 20 (as indicated by the "arrows") being brought together and toward each other to surround an aircraft seat support track 17a, and to form the present aircraft cabin assembly 15a (aircraft cabin assembly 15a comprising the aircraft cabin fluid directing assembly 20 in combination with the aircraft seat support track 17a in an assembled state).

As shown in FIG. 3A, aircraft cabin fluid directing assembly 20 in an assembled state comprises a fluid collection trough 21 that further comprises a fluid collection trough base 21a formed between fluid collection trough first wall 21b (extending vertically from the fluid collection trough base 21a), and fluid collection trough second wall 21c (extending vertically from the fluid collection trough base 21a). The aircraft cabin fluid directing assembly 20 is formed by combining a fluid collection trough first segment 22 (referred to equivalently herein as "first segment 22") with the fluid collection trough second segment 24 (referred to equivalently herein as "second segment 24"). That is, when the first and second fluid collection trough segments 22, 24 are assembled together, the fluid collection trough 21 is fully formed in the aircraft cabin fluid directing assembly 20. In other words, the fluid collection trough first and second segments 22, 24 each comprise a portion of the fluid collection trough 21 that is fully formed when the first and second fluid collection trough segments 22, 24 are joined together with fluid collection trough 21 comprising a fluid collection trough length ("l"). In addition, fluid collection trough first and second segments 22, 24 each comprise a fluid collection trough first and second segment length that, when the first and second segments are combined is equivalent to the fluid collection trough length ("l") in the assembled fluid collection trough 21.

As shown in FIG. 3A, fluid collection trough first segment 22 further comprises a first segment base 22a comprising a first segment base first surface 22b (referred to equivalently herein as a first segment base "inner", "interior", or "upper" surface), that is configured to contact and collect an amount of fluid and then direct a fluid flow. Fluid collection trough first segment 22 further comprises a first segment base second surface 22c (referred to equivalently herein as a first segment base "outer" or "exterior" surface, and visible in FIG. 3B). First segment base 22a further comprises a first segment base thickness T1 ( T1 shown in FIG.s 5,6) that extends from the first segment base first surface 22b to the first segment base second surface 22c.

Fluid collection trough first segment 22 further comprises a plurality of first segment base cutouts 22d extending through the first segment base thickness, T1, and a plurality of first segment base sloped regions 22e, with the plurality of first segment base sloped regions 22e having a first segment base slope S1 (with first segment sloped regions 22e understood to be "out-of-plane" along the length of the first segment base 22a).In one present example, slope S1 comprises a curved slope ranging from about 5° to about 15°.

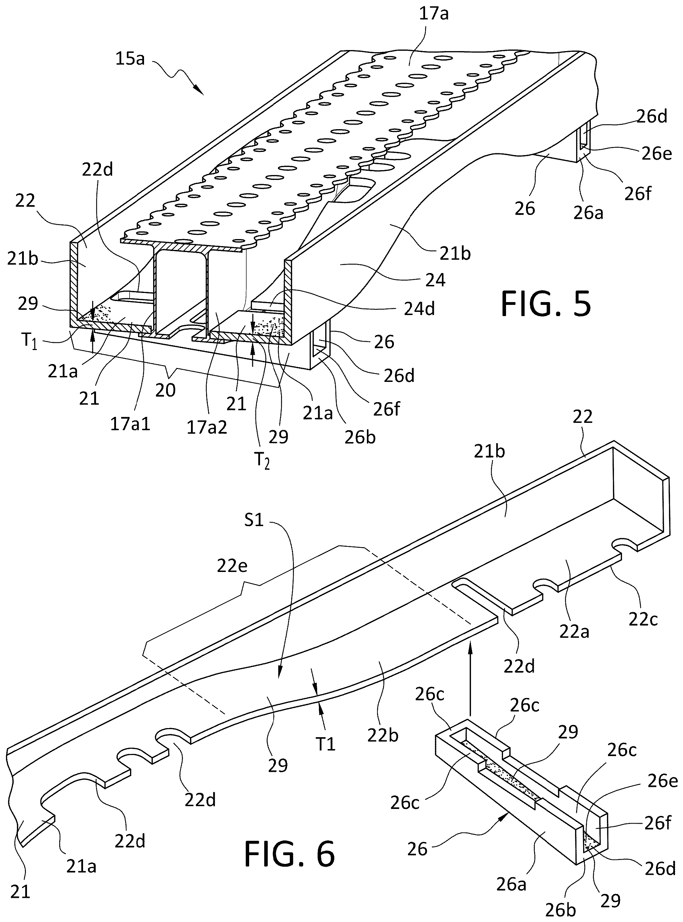

FIG. 3A further shows, fluid collection trough second segment 24 comprising a second segment base 24a comprising a second segment base first surface 24b (referred to equivalently herein as a second segment base "inner" , "interior", or "upper" surface), that is configured to contact and direct a fluid flow, and a second segment base second surface 24c (referred to equivalently herein as a second segment base "outer" or "exterior" surface, more visible in FIG. 3B). Second segment base 24a further comprises a second segment base thickness T2 (shown in FIG. 5) that extends from the second segment base first surface 24b to the second segment base second surface 24c.

Fluid collection trough second_segment 24 further comprises a plurality of second segment base cutouts 24d extending through the second segment base thickness, T2 (shown in FIG. 5), and a plurality of second segment base sloped regions 24e, with the plurality of second segment base sloped regions 24e having a second segment base slope S2 (with second segment sloped regions 24e, understood to be "out-of-plane" along the length of the second segment base 24a). In one present aspect, slope S2 comprises a curved slope ranging from about 5° to about 15°.

As shown in FIG. 3A, aircraft cabin fluid directing assembly 20 further comprises a plurality of drain elements 26 positioned at locations along the underside of the length of the aircraft cabin fluid directing assembly 20, and therefore positioned along the length of the underside of fluid collection trough 21. Drain element 26 is shown in more detail in FIGs. 5,6). Drain elements 26 each comprise a drain element body 26a having a drain element base 26b and drain element walls 26c, with a drain element channel 26d formed and otherwise bounded by the drain element base 26b and the drain element walls 26c. Drain element base 26b comprises a drain element base surface 26e. Drain element channel 26d is configured to comprise a drain element slope S3 (drain element slope S3 configured as a "downward" slope toward the drain open end 26f, along the length of the drain element channel, and with the drain element channel 26d terminating at a drain element open end 26f. In one present example, slope S3 comprises a downward sloping angle ranging from about 5° to about 10°.

In one present example, drain element 26 can be integral with fluid collection trough 22, with drain element 26 contacting first segment base second surface 22c. In another present example, drain element 26 can be integral with fluid collection trough second segment 24, with drain element 26 contacting second segment base second surface 24c. In another present example, drain element 26 can be a discrete and separate component of the aircraft cabin fluid directing assembly 20, with the drain element 26 brought into contact with and affixed to one or both of the first segment base second surface 22c and the second segment second surface 24c at selected positions at the larger cutouts 22d, 24d shown along the length of the aircraft cabin fluid directing assembly 20.

Drain elements, as shown in FIG. 3A, can be fixedly located and otherwise fixedly positioned at or near the nadir of the first segment base sloped regions 22e and the second segment base sloped regions 24e,with the nadir of the sloped regions configured to occur and otherwise positioned at the locations of the larger cutouts 22d, 24d shown along the length of the aircraft cabin fluid directing assembly 20.

The locations of the plurality of drain elements 26 along the length of the fluid collection trough 21 of the aircraft cabin fluid directing assembly 20 are selected to maximize and otherwise direct and facilitate the removal and/or elimination therefrom of a fluid flow collected within the fluid collection trough 21 of the present aircraft cabin fluid directing assembly 20.

In one present example, the fluid collection trough has at least one fluid collection trough cutout in communication with at least one drain element configured to align with the at least one fluid collection trough cutout.

In a further present example, at least one of the first segment base first surface, the second segment base first surface, and the drain element base surface can comprise (e.g., as an additional applied layer) or can incorporate or can be made from a hydrophobic material to further facilitate a substantially complete elimination from the fluid collection trough 21 of any collected fluid that may be, for example, a water-based, and/or a water containing fluid. In another example, at least one of the first segment base first surface, the second segment base first surface, and the drain element base surface are made from a hydrophobic material. In another present example, at least one of the first segment base first surface, the second segment base first surface, and the drain element base surface comprise a hydrophobic material provided to at least one of the surfaces as a separate material layer that can be a hydrophobic material layer coating 29 (shown in greater detail at least in FIG. 6).

As stated herein, FIG. 3B is an elevated "or "top" view showing the present aircraft cabin fluid directing assembly 20 (of the type shown in FIG. 3A) in a pre-assembled state, and with components of the aircraft cabin fluid directing assembly 20 (as indicated by the "arrows") being brought together and toward each other to contact and otherwise substantially surround an aircraft seat support track 17a, and to form a present aircraft cabin assembly 15a (aircraft cabin assembly 15a comprising the aircraft cabin fluid directing assembly 20 in combination with the aircraft seat support track 17a in an assembled state). That is, as shown in FIG. 3B each of the fluid collection trough first and second segments 22, 24 comprise a portion of the fluid collection trough 21, such that, when the first and second segments are brought together in an assembled position in contact with (and surrounding in intimate contact) the aircraft seat support track 17a, a completed and functioning fluid collection trough 21 is constructed.

Although not shown in FIG. 3B, one or both of the fluid collection trough first and second segments 22, 24 can further comprise complementary and associated fastening mechanisms that can fasten, "interlock", and/or releasably fasten, "interlock", etc., the fluid collection trough first and second segments 22, 24 together, and/or that can releasably fasten, "interlock", etc., one or more of the first and second segments to an associated aircraft seat element that can be, for example, an aircraft seat support track 17a.

In one present aspect, one or both of the fluid collection trough first and second segments 22, 24 can further comprise complementary and associated fastening mechanisms that can repeatedly fasten and unfasten and/or "interlock" and or "mate" together, and release the fluid collection trough first and second segments 22, 24 from one another, such that the fluid collection trough first and second segments 22, 24 can be retrofitted with (and to "surround") an associated aircraft seat support track 17a, and the fluid collection trough first and second segments 22, 24 can further be released from one another and removed, for example, to facilitate replacement, facilitate servicing, facilitate maintenance, facilitate replacement, facilitate seat assembly installation, facilitate seat assembly replacement, etc.

FIG. 4 is a view of the underside (e.g., a "bottom view") of a disassembled state (referred to equivalently herein as a pre-assembled state) of the aircraft cabin fluid directing assembly 20 components (of the type shown in FIG. 3B) being brought together to surround aircraft seat support track 17a, and to form aircraft cabin assembly 15a (aircraft cabin assembly 15a comprising the assembled aircraft cabin fluid directing assembly 20 in position surrounding and in combination with aircraft seat support track 17a). The underside view of FIG. 4 perhaps better illustrates the first segment base second surface 22c (of fluid collection trough first segment 22) and the second segment base second surface 24c (of fluid collection trough second segment 24) of the fluid collection trough 21, with drain elements 26 shown as integral components of fluid collection trough first segment 22.

FIG. 5 is an enlarged end view of a portion of the aircraft cabin assembly 15a (aircraft cabin assembly 15a comprising the assembled aircraft cabin fluid directing assembly 20 in position surrounding aircraft seat support track 17a). As shown in FIG. 5, the aircraft cabin fluid diverting assembly 20 is in an assembled position surrounding the aircraft seat support track 17a, with fluid collection trough first segment 22 brought into contact with the aircraft seat support track first side 17a1 and with the collection trough second segment 24 brought into contact with the aircraft seat support track second side 17a2.

FIG. 5 further shows a first segment base cutout 22d and a second segment base cutout 24d aligned over one of the drain elements 26. In operation, an amount of fluid present on an aircraft cabin floor near a passenger seat migrates toward and/or otherwise enters into fluid collection trough 21 of the aircraft fluid directing assembly 20 (due to, for example, a grade or slope that can be introduced, for example, into the aircraft cabin floor and with a grade or slope in the aircraft cabin floor otherwise configured to facilitate the directing of an amount of fluid first toward a cabin seat assembly area, and then into the fluid collection trough 21).

In further operation, the fluid in the fluid collection trough 21 can then encounter a first segment slope region 22e (perhaps more visible in FIG. 6, with slope S1 of slope region 22e having a slope S1 ranging from about 5° to about 15°) and the fluid can further and coincidentally encounter second segment slope region 24e (having a slope S2 ranging from about 5° to about 15°), with the slope regions facilitating and otherwise establishing a selected fluid flow (e.g., a directed and slope-based fluid flow in a selected direction and at a selected fluid flow rate) that will travel in the fluid collection trough 21 of the aircraft cabin fluid directing assembly 20, (and the aircraft cabin assembly 15a) and with the fluid flow then being directed toward first and second segment cutouts 22d, 24d that are located over and that are otherwise aligned with an associated drain element 26 to direct the fluid flow from the fluid collection trough 21 into the drain channel 26d of drain element 26.

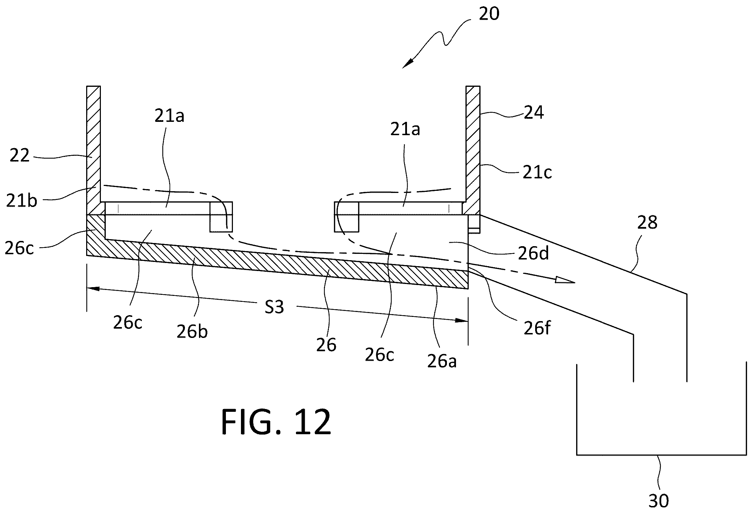

The internal drain slope S3 of the drain channel 26d will then direct and otherwise facilitate the fluid flow through the drain channel 26d toward the drain open end 26f, and the fluid flow will exit the aircraft cabin fluid assembly 20 (and the aircraft cabin assembly 15a). In one present example, the internal drain slope S3 of the drain channel 26d ranges from about 5° to about 10°. In one present example, the drain open end 26f of drain element 26 can be in communication with and can otherwise adjoin a conduit 29 configured to further direct a fluid flow exiting the aircraft cabin fluid directing assembly 20 away from the assembly to a desired location that can include exit pathways for fluid directed from the aircraft, fluid collection vessels, bilge collector in a bilge collection area, etc. (See FIG. 12 showing conduit 28 and fluid collector 30 that can be, for example, a bilge collector.)

FIG. 6 shows an enlarged elevated perspective partial view of present components (e.g., the fluid collection trough first segment 22 and the drain element 26) of the present aircraft cabin fluid assembly 15a, and of the present aircraft fluid directing assembly 20 (e.g., the two components shown in a non-fully-assembled state, that can be a "pre-assembled" state). As shown in FIG. 6, fluid collection trough first segment 22 comprises a portion (a portion that can be about 50%, or about one-half the total width) of the fluid collection trough 21 that is completely formed when fluid collection trough first segment 22 and fluid collection trough second segment 24 are brought together in an assembled state (as shown, for example, in FIG. 5).

As further shown in FIG. 6, first segment base 22a comprises a first segment base thickness T1 between and extending from the first segment base first side 22b and the first segment base second side 22c (not visible in FIG. 6), with first segment base cutouts 22d extending through the first segment base thickness, T1. A number of the (e.g., "smaller dimensioned" base cutouts as compared to the dimension of the "larger dimensioned" base cutouts configured to align with the drain element 26)) first segment base cutouts 22d are dimensioned to accommodate and associate with an aircraft seat support element 17 (e.g., an aircraft seat frame post or frame strut, etc.) that extends downward from, for example, an aircraft seat or seat frame and that is configured to engage with an aircraft seat support track, typically located at or beneath an aircraft cabin floor and/or floor segment.

In an assembled state, the "smaller dimensioned" first segment base cutouts 22d of the type shown in FIG. 6 are configured to nest against and otherwise receive a distal end of the aircraft seat support element 17 such that, when fluid collection trough first segment 22 is brought into contact with fluid collection trough first segment 24, a distal end of the aircraft seat support element 17 is substantially completely surrounded by the first and second segments 22, 24. The proximal end of the aircraft seat support element being understood to be close to and to otherwise contact t the aircraft seat/seat assembly, seat assembly frame, etc.)

As further shown in FIG.6, the "larger dimensioned" first segment base cutouts 22d are dimensioned and otherwise configured to align with the selected placement of drain elements 26 along the length of the fluid collection trough and at the nadir of the trough base slope region. Drain element 26 is shown in FIG. 6 as a discrete element that can be a separate component that is attached to bottom surface of the fluid collection trough first and second segments 22, 24, for example, and attached to both first and second segments after assembly of the fluid collection trough first and second segments 22, 24.

In one present example, and as shown elsewhere in the present FIGs, the drain element 26 is attached to the bottom surface of one of either the fluid collection trough first segment 22 or the fluid collection trough second segment 24, before assembly of the fluid collection trough first and second segments 22, 24 into the aircraft cabin fluid directing assembly 20, and the aircraft cabin assembly 15a. In another present example, the drain element 26 also can be integrated into, and/or integral, as one single unitary part, with fluid collection trough first segment 22 (or, with fluid collection trough second segment 24).

According to one present aspect, when the drain element 26 is already affixed to or integral with the fluid collection trough first segment 22, the fluid collection trough first segment 22 and the fluid collection trough second segment 24 are brought together into the assembled state, a seal is formed at the interface of the upper surface of the drain walls 26c and the first segment base second surface 22c and at the interface of the upper surface of the drain walls 26c and the second segment base second surface 24c to complete the formation of the drain channel 26d.

The sloped regions formed in the first segment trough base and the second segment trough base of the fluid collection trough are configured to slope from one or more slope apex regions to one or more sloped nadir regions, with the slope nadir regions configured to structurally coincide in the fluid collection trough with the cutouts in the trough base that align with the drain elements. The slope(s) introduced to the fluid collection trough and to the drain element are configured, in combination, to ensure the establishment of a selected fluid flow in a selected direction toward the drain elements and to further ensure that the fluid flow will exit the present aircraft cabin fluid directing assemblies substantially completely via the drain elements.

In one present example, the first and second segment base slopes (S1, S2) comprise an "out-of-plane" degree of slope ranging from about 5° to about 15° to facilitate and otherwise establish a selected fluid flow (e.g., a directed and slope-assisted fluid flow in a selected direction and at a selected flow rate) that will travel along and exit from the fluid collection trough 21 of the aircraft cabin fluid directing assembly 20.

In one present example, the first segment base slope (S1) and said second segment base slope (S2) comprise a dimensional slope gradient that may be more linear than curved (e.g., a more linear "out-of-plane" slope gradient), and ranging from about 0.125 inch/ft to about 1.0 inch/ft.

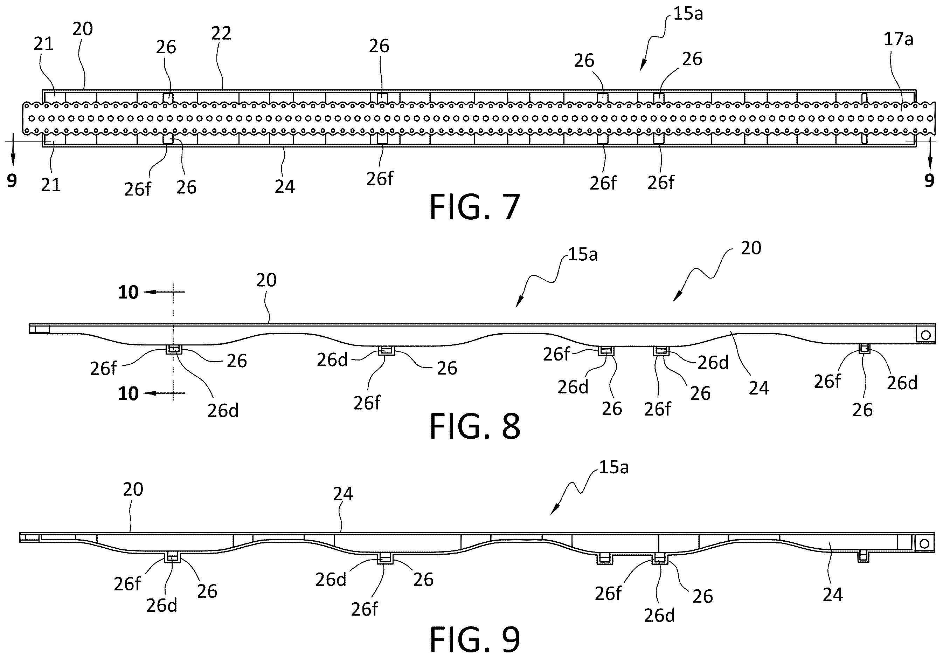

FIGs. 7, 8, and 9 are views of the aircraft cabin assembly 15a comprising and formed by the aircraft cabin fluid directing assembly 20 in position with, and in combination with, the aircraft seat support track 17a. FIG. 7 is an overhead, plan, or "top" view of the aircraft cabin assembly 15a. As shown in FIG. 7, the aircraft seat support track 17a is located between and surrounded by the first segment (trough) base 22 and the second segment (trough) base 24 to form the fluid collection trough 21 of the aircraft cabin fluid directing assembly 20, and with the aircraft fluid directing assembly 20 combined with the aircraft seat support track 17a to form the aircraft cabin assembly 15a.

FIG. 8 is a side view of the aircraft cabin assembly 15a of the type as shown in FIG 7, with the second segment (trough) base 24 being visible, and further showing the drain elements 26, and the drain open end 26f of the drain channel 26d of the drain element 26.

FIG. 9 is a cross-sectional side view of the aircraft cabin assembly 15a of the type shown in FIGs. 7 and 8, with the aircraft cabin assembly 15a comprising the aircraft cabin fluid directing assembly 20 in position with, and in combination with, the aircraft seat support track 17a, with the view shown in FIG. 9 taken along 9-9 as shown in FIG. 7.

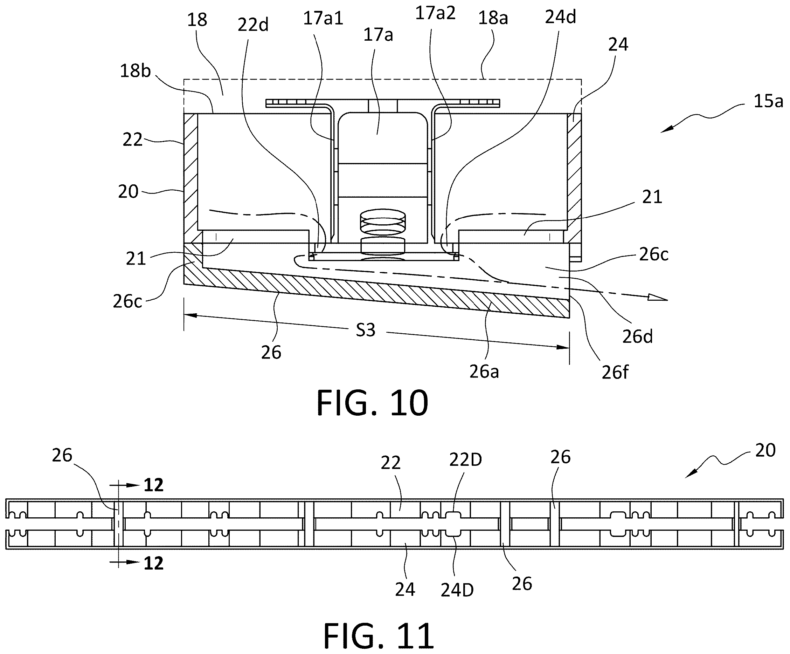

FIG. 10 is an enlarged cross-sectional end view of the aircraft cabin assembly 15a comprising the aircraft cabin fluid directing assembly 20 in position with, and in combination with, the aircraft seat support track 17a with the view taken along the line 10-10 in FIG. 8. The enlarged cross-sectional end view in FIG. 10 shows the association of the drain element 26 in position beneath the joined first segment base 22 and second segment base 24, and with drain element positioned and otherwise configured to align with and dimensioned to "cover" and otherwise completely overlap the opening in the fluid collection trough 21 formed by a first segment base cutout 22d and a second segment base cutout 24d positioned on either side of (and that are configured to "surround") the aircraft seat support track 17a.

As shown in FIG. 10, first segment base 22 is positioned adjacent to and in immediate contact with aircraft seat support track first side 17a1, and second segment base 22 is positioned adjacent to and in immediate contact with aircraft seat support track second side 17a2, with the understanding that, according to present aspects, a first segment base cutout 22d and a second segment base cutout 24d are dimensioned to surround a distal end of aircraft seat support element 17 that is configured to extend vertically down from, for example, an aircraft seat frame and with the aircraft seat support element distal end fixedly and perhaps removably engaging the aircraft seat support track 17a. In addition, first and second segment trough base cutouts 22d, 24d are configured to align with the drain element positioned beneath opening formed by additional cutouts aligned with the drain element.

As shown in FIG. 10, in operation, as a fluid volume begins to collect in the fluid collection trough 21 of the aircraft cabin fluid directing assembly 20, the fluid (that can proceed along a flow path indicated by a "dotted arrow" in FIG. 10) is directed from the fluid collection trough 21 according to and in response to internal physical slopes presented and otherwise introduced into the fluid collection trough 21 (and trough segments 22, 24), with the fluid flowing along a fluid flow path that is established according to present aspects, and with the fluid flow directed along and through the trough 21 to the cutouts 22d, 24d in the trough base 21a of trough 21, with the cutouts located directly over the drain elements 26. The fluid flow in the fluid flow path is directed into the drain channel 26d of the drain element 26, and then proceeds through the drain channel 26d assisted by the drain slope (S3) of the drain base 26b presented in the drain channel 26d, with the flow path proceeding out of the drain element 26 at the drain open end 26f of the drain channel 26d.

FIG. 11 is an overhead, plan, or "top" view of the present aircraft cabin fluid directing assembly 20 of the type shown, for example, in FIG. 3A. As explained herein, it is the aircraft cabin fluid assembly 20 in combination with the surrounded aircraft seat support track 17a that forms the aircraft cabin assembly 15a. FIGs. 11 and 12 provide further views of the aircraft cabin fluid assembly 20 (without the presence of the aircraft seat support track 17a).

FIG. 12 is a cross-sectional side view of a present aircraft cabin fluid directing assembly 20, with the cross-sectional side view taken along the line 12-12 in FIG. 11, and with the flow path again shown in a "dotted arrow", and with further detail provided showing the drain element body 26a, drain element base 26b, and drain element walls 26c of drain element 26. Again, as in FIG. 11, aircraft cabin fluid directing assembly 20 is shown without the presence of the aircraft seat support track 17a that is present in the aircraft cabin assembly 15a (that is, for example, shown at least present in FIGs. 7, 8, 9, and 10). FIG. 12 further shows a fluid flow exiting the drain open end 26f at channel 26d of drain element 26, with the drain open end 26f in direct contact with fluid conduit 28 that is configured to direct a fluid flow exiting from drain element 26 to a fluid collection area or a fluid collector that is shown in FIG. 12 as fluid collector 30 that can be, for example, a bilge collector.

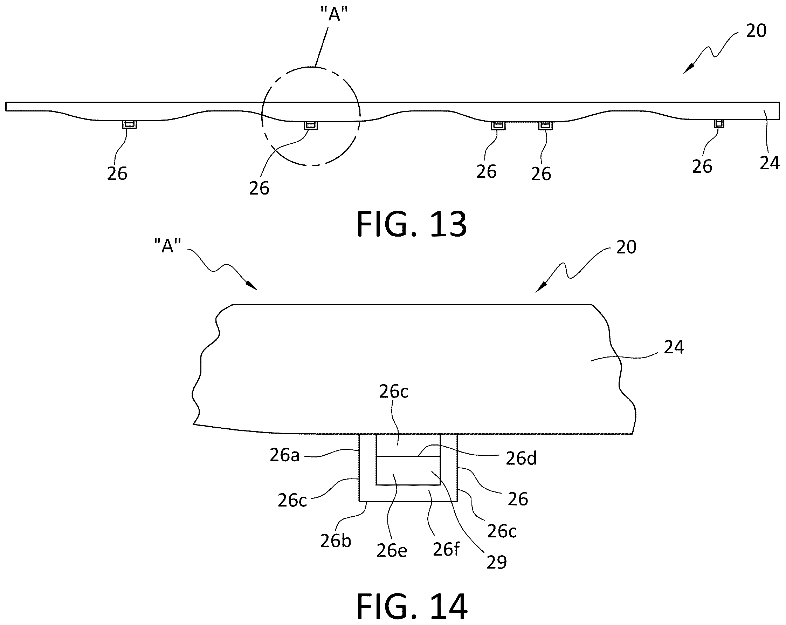

FIG. 13 is a further side view of the present aircraft cabin fluid directing assembly 20, similar to the view shown in FIG. 8, and showing fluid collection trough second segment 24 with drain elements 26 positioned on the underside of the aircraft cabin fluid directing assembly 20. FIG. 14 is an enlarged view of an "encircled dotted line", "A" of the aircraft cabin fluid directing assembly 20 shown in FIG. 13, with greater detail of the drain element 26 positioned beneath (e.g., on the underside) of fluid collection trough second segment 24 and aircraft cabin fluid directing assembly 20, and showing a facing view into drain element body 26a, drain element base 26b (that can incorporate, or to which can be applied a hydrophobic material 29 that can be an applied hydrophobic material layer, drain element walls 26c, drain element channel 26d, and drain element open end 26f of drain element 26.

According to present aspects, the aircraft cabin fluid directing assembly can be made from a resilient material (e.g., plastic, silicone, rubber, foam, etc.) that can be at least slightly repeatably compressible and/or that can be slightly repeatably deformable, with the resilient material able to exert an outward force in the opposite direction of inwardly compressible forces to which the material is subjected. That is, according to a present aspect, the material selected for the present first and second segments of the present aircraft cabin fluid directing assembly will not "crush" or permanently deform upon an initial compression. Instead, the material selected for the present first and second segments of the present aircraft cabin fluid directing assembly can possess the physical characteristics that allow the segments and assembly to be at least slightly compressed from an initial dimension into a compressed dimension. If the assembly and segments are removed and reused, the segments and the assembly dimension can resiliently expand (e.g., in the absence of a compressive force) and return to a non-compressed dimension that, even after use, can be very close to, and that, in one present example can be nearly identical to, the initial dimension. In one present example, the present first and second segments can be made from a material having a useful Young's modulus range. In one present example, the fluid collection first and second segments can be made from a foam material that can be a closed cell foam material. In another present example, the fluid collection first and second segments can be made from a material having a Young's modulus of about 45kPa.

In another present example, the present aircraft cabin fluid directing assembly can incorporate and can otherwise integrally comprise a material seal about the inner perimeter and/or the outer perimeters of the fluid collection trough first and second segments for the purpose of introducing further resilient characteristics to the assembly to facilitate installation, removable, replacement, positioning, etc., of the present aircraft cabin fluid directing assembly. Such perimeter seals can comprise the resilient characteristics of repeatable compressibility to a compressed dimension, and re-expansion to an initial dimension in the absence of a compressive force described herein with respect to the material selected for the trough segments. The incorporation of a resilient seal element about the inner and outer perimeters of the inner and/or outer perimeter of the first and second trough segments can broaden the useful material selection of the trough segments, with the trough segments being made from a material that is not as resiliently compressible as the material selected for the perimeter seals, so long as the perimeter seals comprise a selected resilient compressibility, and such perimeter seals further can comprise a useful Young's modulus range. In one example, the material seal can be made from a foam material that can be a closed cell foam material. In another present example, the fluid collection first and second segments can be made from a material having a Young's modulus of about 45kPa.

As mentioned herein, the present aircraft cabin fluid directing assembly (and the assemblies comprising the aircraft cabin fluid directing assembly) establish a liquid flow path resulting from the incorporation of selected "slopes" provided to and within the fluid collection trough. The established flow path and the fluid removal and fluid directing efficiency of the present aircraft cabin fluid directing assembly can be increased by selecting a hydrophobic material and, in one example, further enhancing the hydrophobicity of the present fluid contacting assembly surfaces by coating the fluid-contacting surfaces in the trough segments and in the drain element with an additional layer of highly hydrophobic material (that can be a coating material layer) at least for the purpose of, for example, eliminating or significantly reducing the presence of any amount of "standing fluid" within the assembly.

The terms "inboard" and "outboard" as used herein are terms meant to convey relative orientation between and/or among components with respect to their placement on an aircraft. That is, the term "outboard" refers to a location of a component or component side as viewed from within the aircraft that is closer (than another component or component side) to a sidewall on the aircraft, than to a median line traversing a central longitudinal axis within the aircraft that can be, for example, along the center of, for example, a central aircraft aisle. The term "inboard" refers to a location of a component or of a component side, when viewed from within the aircraft, that is closer (than another component or component side) to a median line traversing a central longitudinal location within the aircraft that can be, for example, along the center of, for example, a central aircraft aisle, and further away from, for example, the sidewall than another component.

According to present aspects, the fluid collection trough first segment 22, and the fluid collection trough second segment 24 can be oriented within the aircraft fluid collection assembly 20 and within the aircraft cabin assembly 15a as either "outboard sides" of the assemblies or as "inboard sides" of the assemblies. In addition, the drain element 26 can be integral with either of the fluid collection trough first segment 22 and/or the fluid collection trough second segment 24, with the drain open end 26f of drain element 26 oriented within the assemblies (15a, 20) and selected to face "outboard" or "inboard"; with aircraft design consideration and architecture given as to drain outlet orientation (the drain open end 26f) of the drain element 26 being, for example, selected to be located and placed into communication with or intimately contacting a conduit (e.g., a drain line) that leads to and/or is communication with a fluid collection vessel (or that, for example, can lead to a duct configured to exit the aircraft and otherwise direct collected fluid from the aircraft during one or more flight phases) that is selected to be located in an inboard or outboard location so as to, for example, minimize total conduit length and, consequently conduit material total weight, etc.

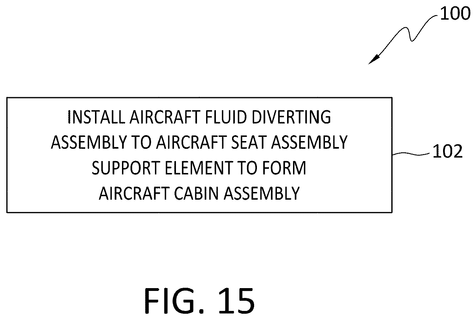

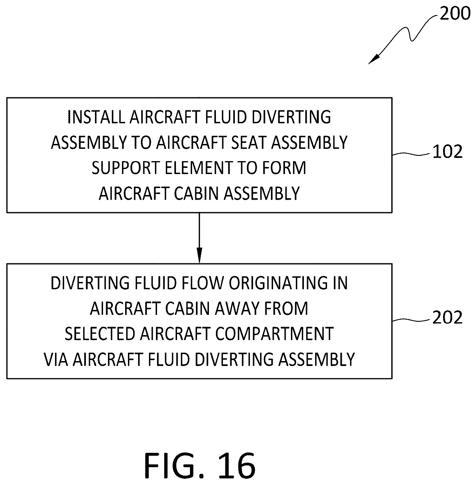

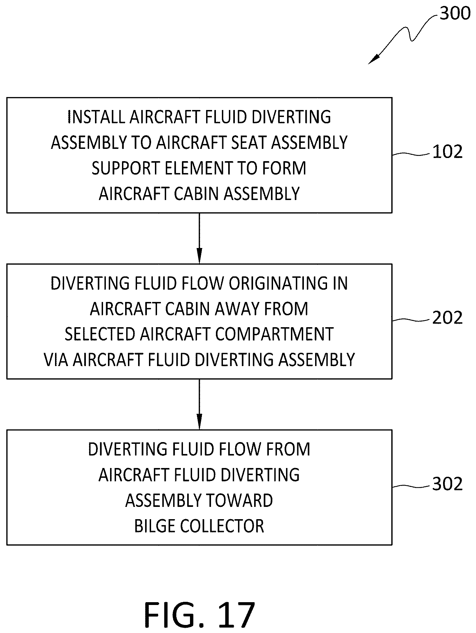

FIGs. 15, 16, and 17 are flowcharts outlining present methods according to present aspects, with the methods outlined in FIGs. 15, 16, and 17 configured to employ, form and/or install the present aircraft cabin fluid directing assembly 20 shown at least in FIGs. 2, 3A, 3B, 4, 5, 6, 7, 8, 9, 10, 11, 12, 13, 14 and as described herein; and configured to employ, form and/or install the present the aircraft cabin assembly 15a shown at least in FIGs. 2, 3B, 4, 5, 7, 8, 9, 10 and as described herein.

FIG. 15 shows a present method for restricting and otherwise preventing entry of unwanted fluid into an aircraft moisture-sensitive compartment from an aircraft cabin through a section of aircraft cabin floor located proximate to an aircraft passenger seat, with the method 100 comprising installing 102 an aircraft fluid diverting assembly configured to substantially laterally surround said an aircraft seat assembly support element, with the aircraft seat assembly support element positioned beneath an aircraft cabin floor, and with the aircraft fluid diverting assembly 20 comprising a fluid collection trough 21 comprising a fluid collection trough length ("l"), with the fluid collection trough further comprising a fluid collection trough base 21a, a fluid collection trough first wall 21b, and a fluid collection trough second wall 21c. The fluid collection trough further comprises a fluid collection trough first segment 22 comprising a fluid collection trough first segment length, with the fluid collection trough first segment further comprising the fluid collection trough first wall 21b extending vertically from a first segment base 22a, with the first segment base comprising a first segment base first surface 22b, a first segment base second surface 22c, and a first segment base thickness (T1), and with the first segment base thickness (T1) extending from the first segment base first surface (22b) to the first segment base second surface 22c. The first segment base further comprises a plurality of first segment base cutout 22d (extending through the first segment base thickness (T1)), with the plurality of first segment base cutouts positioned at selected locations along the fluid collection trough first segment length, with the plurality of first segment cutouts dimensioned to partially surround an aircraft seat support element in an aircraft cabin fluid diverting assembly assembled configuration, with the first segment base 22a further comprising a first segment base sloped region 22e along the fluid collection trough first segment length, and with the first segment base sloped region 22e comprising a first segment base slope (S1). The fluid collection trough second segment 24 comprises a fluid collection trough second segment length, with the fluid collection trough second segment further comprising the fluid collection trough second wall 21c extending vertically from a second segment base 24a, with the second segment base comprising a second segment base first surface 24b, a second segment base second surface 24c, and a second segment base thickness, with the second segment base thickness (T2) extending from the second segment base first surface to the second segment base second surface, with the second segment base further comprising a plurality of second segment base cutouts 24d extending through the second segment base thickness, with the second segment base cutouts positioned at selected locations along the fluid collection trough second segment length, with the plurality of second segment base cutouts dimensioned to partially surround the aircraft seat support element 17 in the aircraft cabin fluid diverting assembly assembled configuration, with the second segment base 24a further comprising a second segment base sloped region 24e along the fluid collection base trough second segment length, and with the second segment base sloped region 24e comprising a second segment base slope (S2). The aircraft fluid diverting assembly further comprises a drain element 26, with the drain element in fixed communication with at least one of the fluid collection trough first segment and said fluid collection trough second segment, with the drain element further comprising a drain body 26a, with the drain body comprising a drain body length, with the drain body further comprising a drain base 26b and three drain body walls 26c extending from the drain base 26b, with the drain body further comprising a drain channel 26d, with the drain channel further comprising a drain channel surface 26e, with the drain channel bounded by the three drain walls and the drain base, and with the drain channel further comprising an open drain end 26f.

In another present aspect, a present method 200 for restricting and otherwise preventing an unwanted entry of fluid into an aircraft moisture-sensitive compartment from an aircraft cabin through a section of aircraft cabin floor comprises the elements and aspects of method 100 and further comprises diverting 202 a fluid flow originating in an aircraft cabin from the aircraft cabin and away from a compartment that can be, for example, an equipment bay or other region sensitive to unwanted moisture via the aircraft fluid diverting assembly.

In another present aspect, a present method 300 comprises the elements and aspects of methods 100 and 200, and further comprises diverting 302 the fluid flow from the aircraft fluid diverting assembly and into a fluid collector that can be, for example, a bilge collector.

Further, the present disclosure may be defined by the following non-limiting examples:
Example 1: An aircraft cabin fluid diverting assembly 20 comprising: a fluid collection trough 21 comprising a fluid collection trough length "l", said fluid collection trough 21 further comprising a fluid collection trough base 21a, a fluid collection trough first wall 21b, a fluid collection trough second wall 21c, said fluid collection trough 21 further comprising: a fluid collection trough first segment 22 comprising a fluid collection trough first segment length, said fluid collection trough first segment 22 further comprising the fluid collection trough first wall 21b extending vertically from a first segment base 22a, said fluid collection trough first segment 22 further comprising said first segment base 22a and a first segment base first surface 22b, a first segment base second surface 22c, and a first segment base thickness T1, said first segment base thickness T1 extending from the first segment base first surface 22b to the first segment base second surface 22c, said first segment base 22a further comprising a plurality of first segment base cutouts 22d extending through the first segment base thickness T1, said plurality of first segment base cutouts 22d positioned at selected locations along the fluid collection trough first segment length, said first segment base 22a further comprising a first segment base sloped region 22e along the fluid collection base trough first segment length, said first segment base sloped region 22e comprising a first segment base slope S1; a fluid collection trough second segment 24 comprising a fluid collection trough second segment length, said fluid collection trough second segment 24 further comprising the fluid collection trough second wall 21c extending vertically from a second segment base 24a, said second segment base 24a comprising a second segment base first surface 24b, a second segment base second surface 24c, and a second segment base thickness T2, said second segment base thickness T2 extending from the second segment base first surface 24b to the second segment base second surface 24c, said second segment base 24a further comprising a plurality of second segment base cutouts 24d extending through the second segment base thickness T2, said second segment base cutouts 24d positioned at selected locations along the fluid collection trough second section length, said second segment base 24a further comprising a second segment base sloped region 24e along the fluid collection base trough second segment length, said second segment base sloped region 24e comprising a second segment base slope S2; and a drain element 26, said drain element 26 in fixed communication with at least one of said fluid collection trough first segment 22 and said fluid collection trough second segment 24.
Example 2: The aircraft cabin fluid diverting assembly 20 of Example 1, wherein the drain element 26 comprises a drain body 26a comprising a drain body length, said drain body 26a further comprising a drain base 26b and three drain body walls 26c extending from the drain base 26b, said drain body 26a further comprising a drain channel 26d, said drain channel 26d further comprising a drain channel surface 26e, said drain channel 26d bounded by the three drain body walls 26c and the drain base 26b, said drain channel 26d further comprising an open drain end 26f.
Example 3: The aircraft cabin fluid diverting assembly 20 of Example 2, wherein said open drain end 26f is in communication with a fluid conduit 28, said fluid conduit 28 configured to receive a fluid flow from said drain element 26.
Example 4: The aircraft cabin fluid diverting assembly 20 of Example 2 or Example 3, wherein the drain element 26 is bonded to at least one of the first segment base second surface 22c and the second segment base second surface 24c.
Example 5: The aircraft cabin fluid diverting assembly 20 of Example 2 or Example 3, wherein the drain element 26 is integral with one of the first segment base second surface 22c and the second segment base second surface 24c.
Example 6: The aircraft cabin fluid diverting assembly 20 of any one of Examples 1 to 5, wherein said first segment base slope S1 and said second segment base slope S2 are configured to direct a fluid flow to the drain element 26.
Example 7: The aircraft cabin fluid diverting assembly 20 of any one of Examples 1 to 6, wherein said first segment base slope S1 and said second segment base slope S2 comprise a dimensional slope gradient ranging from about 0.125 inch/ft to about 1.0 inch/ft.
Example 8: The aircraft cabin fluid diverting assembly 20 of any one of Examples 2 to 7, wherein at least one of said first segment base first surface 22b, said second segment base first surface 24b, and said drain channel surface 26e comprises a hydrophobic material.
Example 9: The aircraft cabin fluid diverting assembly 20 of any one of Examples 2 to 8, wherein said drain channel 26d comprises a drain slope S3, said drain slope S3 configured to descend toward the open drain end 26f.
Example 10: An aircraft 10 comprising the aircraft cabin fluid diverting assembly 20 of any one of Examples 1 to 9.
Example 11: An aircraft cabin assembly 15a comprising: an aircraft seat assembly support element 17 comprising an aircraft seat support track 17a positioned proximate to an aircraft cabin floor second surface 18b of an aircraft cabin floor 18, said aircraft seat assembly support element 17 configured to be at least partially concealed beneath the aircraft cabin floor 18; and an aircraft fluid diverting assembly 20 configured to substantially surround an aircraft seat assembly support element 17, said aircraft fluid diverting assembly 20 positioned to further substantially surround the aircraft seat support track 17a, said aircraft fluid diverting assembly 20 comprising: a fluid collection trough 21 comprising a fluid collection trough length "l", said fluid collection trough 21 further comprising a fluid collection trough base 21a, a fluid collection trough first wall 21b, a fluid collection trough second wall 21c, said fluid collection trough 21 further comprising: a fluid collection trough first segment 22 comprising a fluid collection trough first segment length, said fluid collection trough first segment 22 further comprising the fluid collection trough first wall 21b extending vertically from a first segment base 22a, said fluid collection trough first segment 22 further comprising said first segment base 22a and a first segment base first surface 22b, a first segment base second surface 22c, and a first segment base thickness T1, said first segment base thickness T1 extending from the first segment base first surface 22b to the first segment base second surface 22c, said first segment base 22a further comprising a plurality of first segment base cutouts 22d extending through the first segment base thickness T1, said plurality of first segment base cutouts 22d positioned at selected locations along the fluid collection trough first segment length, said first segment base 22a further comprising a first segment base sloped region 22e along the fluid collection base trough first segment length, said first segment base sloped region 22e comprising a first segment base slope S1; a fluid collection trough second segment 24 comprising a fluid collection trough second segment length, said fluid collection trough second segment 24 further comprising the fluid collection trough second wall 21c extending vertically from a second segment base 24a, said second segment base 24a comprising a second segment base first surface 24b, a second segment base second surface 24c, and a second segment base thickness T2, said second segment base thickness T2 extending from the second segment base first surface 24b to the second segment base second surface 24c, said second segment base 24a further comprising a plurality of second segment base cutouts 24d extending through the second segment base thickness T2, said second segment base cutouts 24d positioned at selected locations along the fluid collection trough second section length, said second segment base 24a further comprising a second segment base sloped region 24e along the fluid collection base trough second segment length, said second segment base sloped region 24e comprising a second segment base slope S2; and a drain element 26, said drain element 26 in fixed communication with at least one of said fluid collection trough first segment 22 and said fluid collection trough second segment 24.
Example 12: The aircraft cabin assembly 15a of Example 11, wherein the drain element 26 comprises a drain body 26a comprising a drain body length, said drain body 26a further comprising a drain base 26b and three drain body walls 26c extending from the drain base 26b, said drain body 26a further comprising a drain channel 26d, said drain channel 26d further comprising a drain channel surface 26e, said drain channel 26d bounded by the three drain body walls 26c and the drain base 26b, said drain channel 26d further comprising an open drain end 26f.
Example 13: The aircraft cabin assembly 15a of Example 12, wherein at least one of said first segment base first surface 22b, said second segment base first surface 24b, and said drain channel surface 26e comprises a hydrophobic material.
Example 14: The aircraft cabin assembly 15a of Example 12 or 13, wherein said open drain end 26f is in communication with a fluid conduit 28, said fluid conduit 28 configured to receive a fluid flow from said drain element 26.
Example 15: The aircraft cabin assembly 15a of any one of Examples 11 to 14, wherein said first segment base slope S1 and said second segment base slope S2 are configured to direct a fluid flow to the drain element 26.
Example 16: The aircraft cabin assembly 15a of any one of Examples 11 to 15, wherein said first segment base slope S1 and said second segment base slope S2 comprise a dimensional slope gradient ranging from about 0.125 inch/ft to about 1.0 inch/ft.
Example 17: An aircraft cabin 14 comprising the aircraft cabin assembly 15a of any one of Examples 11 to 16.
Example 18: An aircraft 10 comprising the aircraft cabin assembly 15a of any one of Examples 11 to 16.
Example 19: A method for preventing an unwanted entry of fluid into an aircraft equipment bay from an aircraft cabin 14 through a section of aircraft cabin floor 18 located proximate to a passenger seat 16, the method comprising: installing an aircraft fluid diverting assembly 20 configured to substantially laterally surround an aircraft seat assembly support element 17, said aircraft seat assembly support element 17 positioned beneath an aircraft cabin floor 18; said aircraft fluid diverting assembly 20 comprising: a fluid collection trough 21 comprising a fluid collection trough length "l", said fluid collection trough 21 further comprising a fluid collection trough base 21a, a fluid collection trough first wall 21b, a fluid collection trough second wall 21c, said fluid collection trough 21 further comprising: a fluid collection trough first segment 22 comprising a fluid collection trough first segment length, said fluid collection trough first segment 22 further comprising the fluid collection trough first wall 21b extending vertically from a first segment base 22a, said fluid collection trough first segment 22 further comprising said first segment base 22a and a first segment base first surface 22b, a first segment base second surface 22c, and a first segment base thickness T1, said first segment base thickness T1 extending from the first segment base first surface 22b to the first segment base second surface 22c, said first segment base 22a further comprising a plurality of first segment base cutouts 22d extending through the first segment base thickness T1, said plurality of first segment base cutouts 22d positioned at selected locations along the fluid collection trough first segment length, said first segment base 22a further comprising a first segment base sloped region 22e along the fluid collection base trough first segment length, said first segment base sloped region 22e comprising a first segment base slope S1; a fluid collection trough second segment 24 comprising a fluid collection trough second segment length, said fluid collection trough second segment 24 further comprising the fluid collection trough second wall 21c extending vertically from a second segment base 24a, said second segment base 24a comprising a second segment base first surface 24b, a second segment base second surface 24c, and a second segment base thickness T2, said second segment base thickness T2 extending from the second segment base first surface 24b to the second segment base second surface 24c, said second segment base 24a further comprising a plurality of second segment base cutouts 24d extending through the second segment base thickness T2, said second segment base cutouts 24d positioned at selected locations along the fluid collection trough second section length, said second segment base 24a further comprising a second segment base sloped region 24e along the fluid collection base trough second segment length, said second segment base sloped region 24e comprising a second segment base slope S2; and a drain element 26, said drain element 26 in fixed communication with at least one of said fluid collection trough first segment 22 and said fluid collection trough second segment 24.
Example 20: The method of Example 19, wherein the drain element 26 comprises a drain body 26a comprising a drain body length, said drain body 26a further comprising a drain base 26b and three drain body walls 26c extending from the drain base 26b, said drain body 26a further comprising a drain channel 26d, said drain channel 26d further comprising a drain channel surface 26e, said drain channel 26d bounded by the three drain body walls 26c and the drain base 26b, said drain channel 26d further comprising an open drain end 26f.
Example 21: The method of Example 19 or 20, further comprising: diverting a fluid flow originating in the aircraft cabin 14 from the aircraft cabin 14 away from the equipment bay via the aircraft fluid diverting assembly 20.
Example 22: The method of any one of Examples 19 to 21, further comprising: diverting the fluid flow from the aircraft fluid diverting assembly 20 into a bilge collector 30.

The term "substantially" as used herein means that a particular characteristic, parameter, or value does not need to be exactly achieved. Rather, deviations or variations, including, for example, tolerances, measurement error, measurement accuracy limitations, and other factors known to those skilled in the field, may occur in amounts that do not preclude the effect that the characteristic was intended to provide. In one present example, the fluid collection trough length, the fluid collection trough first segment length, and the fluid collection trough second segment length are substantially equivalent to one another. In another present example, the fluid collection trough length, the fluid collection trough first segment length, and the fluid collection trough second segment length are equivalent to one another.

The present aspects may, of course, be carried out in other ways than those specifically set forth herein without departing from essential characteristics of the present disclosure. The present aspects are to be considered in all respects as illustrative and not restrictive, and all changes coming within the meaning and equivalency range of the appended claims are intended to be embraced therein.

## Claims

1. An aircraft cabin fluid diverting assembly (20) comprising:
a fluid collection trough (21) comprising a fluid collection trough length (1), said fluid collection trough (21) further comprising a fluid collection trough base (21a), a fluid collection trough first wall (21b), a fluid collection trough second wall (21c), said fluid collection trough (21) further comprising:
a fluid collection trough first segment (22) comprising a fluid collection trough first segment length, said fluid collection trough first segment (22) further comprising the fluid collection trough first wall (21b) extending vertically from a first segment base (22a), said fluid collection trough first segment (22) further comprising said first segment base (22a) and a first segment base first surface (22b), a first segment base second surface (22c), and a first segment base thickness (T1), said first segment base thickness (T1) extending from the first segment base first surface (22b) to the first segment base second surface (22c), said first segment base (22a) further comprising a plurality of first segment base cutouts (22d) extending through the first segment base thickness (T1), said plurality of first segment base cutouts (22d) positioned at selected locations along the fluid collection trough first segment length, said first segment base (22a) further comprising a first segment base sloped region (22e) along the fluid collection base trough first segment length, said first segment base sloped region (22e) comprising a first segment base slope (S1);
a fluid collection trough second segment (24) comprising a fluid collection trough second segment length, said fluid collection trough second segment (24) further comprising the fluid collection trough second wall (21c) extending vertically from a second segment base (24a), said second segment base (24a) comprising a second segment base first surface (24b), a second segment base second surface (24c), and a second segment base thickness (T2), said second segment base thickness (T2) extending from the second segment base first surface (24b) to the second segment base second surface (24c), said second segment base (24a) further comprising a plurality of second segment base cutouts (24d) extending through the second segment base thickness (T2), said second segment base cutouts (24d) positioned at selected locations along the fluid collection trough second section length, said second segment base (24a) further comprising a second segment base sloped region (24e) along the fluid collection base trough second segment length, said second segment base sloped region (24e) comprising a second segment base slope (S2); and
a drain element (26), said drain element (26) in fixed communication with at least one of said fluid collection trough first segment (22) and said fluid collection trough second segment (24).

2. The aircraft cabin fluid diverting assembly (20) of Claim 1, wherein the drain element (26) comprises a drain body (26a) comprising a drain body length, said drain body (26a) further comprising a drain base (26b) and three drain body walls (26c) extending from the drain base (26b), said drain body (26a) further comprising a drain channel (26d), said drain channel (26d) further comprising a drain channel surface (26e), said drain channel (26d) bounded by the three drain body walls (26c) and the drain base (26b), said drain channel (26d) further comprising an open drain end (26f).

3. The aircraft cabin fluid diverting assembly (20) of Claim 2, wherein said open drain end (26f) is in communication with a fluid conduit (28), said fluid conduit (28) configured to receive a fluid flow from said drain element (26).

4. The aircraft cabin fluid diverting assembly (20) of Claim 2 or Claim 3, wherein the drain element (26) is bonded to at least one of the first segment base second surface (22c) and the second segment base second surface (24c); or
wherein the drain element (26) is integral with one of the first segment base second surface (22c) and the second segment base second surface (24c).

5. The aircraft cabin fluid diverting assembly (20) of any one of Claims 1 to 4, wherein said first segment base slope (S1) and said second segment base slope (S2) are configured to direct a fluid flow to the drain element (26).

6. The aircraft cabin fluid diverting assembly (20) of any one of Claims 1 to 5, wherein said first segment base slope (S1) and said second segment base slope (S2) comprise a dimensional slope gradient ranging from about 0.125 inch/ft to about 1.0 inch/ft.

7. The aircraft cabin fluid diverting assembly (20) of any one of Claims 2 to 6, wherein at least one of said first segment base first surface (22b), said second segment base first surface (24b), and said drain channel surface (26e) comprises a hydrophobic material.

8. The aircraft cabin fluid diverting assembly (20) of any one of Claims 2 to 7, wherein said drain channel (26d) comprises a drain slope (S3), said drain slope (S3) configured to descend toward the open drain end (26f).

9. An aircraft (10) comprising the aircraft cabin fluid diverting assembly (20) of any one of Claims 1 to 8.

10. An aircraft cabin assembly (15a) comprising:
an aircraft seat assembly support element (17) comprising an aircraft seat support track (17a) positioned proximate to an aircraft cabin floor second surface (18b) of an aircraft cabin floor (18), said aircraft seat assembly support element (17) configured to be at least partially concealed beneath the aircraft cabin floor (18); and
the aircraft fluid diverting assembly (20) of any one of claims 1 to 8, wherein the aircraft fluid diverting assembly (20) is configured to substantially surround an aircraft seat assembly support element (17), said aircraft fluid diverting assembly (20) positioned to further substantially surround the aircraft seat support track (17a).

11. An aircraft cabin (14) comprising the aircraft cabin assembly (15a) of Claim 10.

12. An aircraft (10) comprising the aircraft cabin assembly (15a) of Claim 10.

13. A method for preventing an unwanted entry of fluid into an aircraft equipment bay from an aircraft cabin (14) through a section of aircraft cabin floor (18) located proximate to a passenger seat (16), the method comprising:
installing the aircraft fluid diverting assembly (20) of claim 1 configured to substantially laterally surround an aircraft seat assembly support element (17), said aircraft seat assembly support element (17) positioned beneath the aircraft cabin floor (18).

14. The method of Claim 13 further comprising:
diverting a fluid flow originating in the aircraft cabin (14) from the aircraft cabin (14) away from the equipment bay via the aircraft fluid diverting assembly (20).

15. The method of Claim 14, further comprising:
diverting the fluid flow from the aircraft fluid diverting assembly (20) into a bilge collector (30).
